# EUROPEAN PATENT APPLICATION

(11) **EP 1 510 135 A1**
(43) Date of publication of application: **02.03.2005**
(21) Application number: 03077658.7
(22) Date of filing: 26.08.2003
(51) Int. Cl.: A23K 1/00, A23K 1/18

(54) **A farm animal feed product with probiotic enterococcus bacteria**

(71) Applicant: Chr. Hansen A/S, 2970 Hoersholm (DK)
(72) Inventor: Leedle, Jane A. Z., Hartland, WI 53209 (US); Kautz, William P., Waukesha, WI 53188 (US); Johnson, Steven C., Waukesha, WI 53186 (US); Lechtenberg, Kelly F., Oakland, NE 68045 (US)

(57) **Abstract**

A farm animal feed product comprising probiotic *Enterococcus* bacteria and the use of this product to reduce the number of pathogenic Escherichia coli O157:H7 cells in feed farm animals such as cattle.

## Description

### FIELD OF THE INVENTION

The present invention relates to a farm animal feed product comprising probiotic *Enterococcus* bacteria and the use of this product to reduce the number of pathogenic Escherichia coli O157:H7 cells in feed farm animals such as cattle.

### DESCRIPTION OF THE BACKGROUND

The animal feed industry, such as the beef cattle industry, is experiencing challenges like never before and one of the most critical challenges to the industry is food safety. The consumer and governmental agencies are requiring that e.g. beef sold in restaurants, grocery stores and meat markets be as safe and pathogen free as possible. Meat packing companies are looking to the feed yards and the cattle producers to implement strategies to help achieve this goal.

The demand for food industry control of potentially contaminating pathogens starts, as noted, at the consumer's level, who are stating, through their buying patterns at the meat case, that they need a product in which they can have confidence. Subsequently retailers look to wholesalers and the packing companies. The packers are looking to the feed yards and e.g. the cattle producers to take the necessary steps to help reduce this problem by adopting safety standards and procedures at all points along the production chain. This issue is key and it will take adjustments of management procedures by all entities involved in beef production to address this issue.

It has been well documented through scientific and medical research that the predominant organism at the root of food safety issues is *Escherichia Coli (E. coli) 0157: H7,* otherwise known as enterohaemorrharic *E. coli* microorganism. *E. coli* O157:H7 is one of hundreds of strains of the bacterium. Although most strains are harmless and live in the intestines of healthy humans and animals, this strain produces a powerful toxin and can cause severe illness. It also possesses other significant attributes, which contribute to its ability to cause disease. One of the more notable of its characteristics is the size of the infectious dose, which is incredibly small in comparison with those for most other food-borne pathogens. Figures as low as two bacteria per 25g food have been quoted capable of creating a disease condition.

The strain *E. coli* O157:H7 was first recognized as a cause of illness in 1982 during an outbreak of
severe bloody diarrhea; the outbreak was traced to contaminate hamburgers. Since then, most infections have resulted from eating undercooked ground beef. The combination of letters and numbers in the name of the bacterium refers to the specific markers found on its surface and distinguishes it from other types of *E. coli.* Another pathogen of concern includes strains of *Salmonella,* with both *E. coli* and *Salmonella* commonly existing in the gastrointestinal tracts of cattle. These organisms are endemic and commonly found in virtually all phases of production. While they may not cause a problem in the host animal they can cause illness and even death in humans. Cattle become "infected" with this organism through exposure in their natural environment. After the organism is ingested it travels to the intestine where it adheres to the tract lining. Meat is "contaminated" by the organism during the slaughtering and processing stages when intestinal contents can come in contact with other meat surfaces and subsequently become mixed with ground beef.

In humans, an *E. coli* infection can lead to bloody diarrhea and even kidney failure. In some persons, particularly children under 5 years of age and the elderly, the infection can also cause a complication called hemolytic uremic syndrome, in which the red blood cells are destroyed and the kidneys fail. About two to seven percent of infections lead to this complication. In the United States, hemolytic uremic syndrome is the principal cause of acute kidney failure in children, and most cases of hemolytic uremic syndrome are caused by the strain *E*. *coli* O157:H7.

Most illness have been associated with eating undercooked, contaminated ground beef. In addition, however, person-to-person contact in families and childcare centers is also an important mode of
transmission. Infection can also occur after drinking raw milk and after swimming in or drinking sewage-contaminated water. As an example of this, the USDA Food Safety and Inspection Service
(FSIS) has estimated that consumption of meat contaminated with pathogenic bacteria annually results in thousands of deaths and millions of illnesses in the U. S. alone. The government estimates the annual losses in production and medical costs may reach as high as $35 billion. The problem is well documented and identified.

Having recognized this problem and a need to solve it or at least diminish it, recent proactive efforts have been shownby the industr. The proactive efforts exerted by e.g. the US beef industry have resulted in recommendations of expanded research and accelerated use of intervening methodologies by industry leaders. Control and treatment techniques such as the irradiation of beef products post slaughter, use of new vaccines in cattle and direct feeding of certain additives are all under serious investigation and consideration as contributing solutions. Of these, the use of feed additives has gained significant interest, largely due to simplicity of administration.

One particular group of feed additives showing significant promise in this area is probiotic or Direct-Fed Microbial (DFM) products. The use of DFM's has grown significantly over recent years largely as a means of enhancing the health and performance of the animal. The use of bacterial-based DFM's in ruminant diets for specific applications has become widely recognized. Products of this nature often contain lactobacilli with *Lactobacillus acidophilus* being one of the most common.

Most bacterial-based DFM's are beneficial because they have effects in the lower gut and not in the rumen. For example, *Lactobacillus acidophilus* produces lactic acid, which may lower the pH in small intestines to levels that inhibit the growth of pathogenic microbes, one of the reasons for the current interest. Early research with DFM in ruminants first involved applications for young calves fed milk, calves being weaned, or cattle being shipped. These animals, in many cases are highly stressed or had a microbial gut ecosystem that was not fully mature. Young cattle have immature digestive tracts that are obviously more prone to upset by pathogenic bacteria. Cattle that are shipped are often on limited feed and water for prolonged periods of time during transit. During these periods microbial populations may decrease in numbers thus resulting in digestive tracts that are in less than optimal condition. Large doses of beneficial organisms were thought to re-colonize a stressed intestinal environment and return gut function to normal.

The American Meat Institute (AMI) Foundation published in 2002 a result of a research study that was done by Mindy Brashears and Michael Galyean of Texas Tech University. The study demonstrated that the feeding of two different Lactobacillus acidophilus bacteria strains gave a significant reduction (P<.05) in the incidence of E. Coli O157:H7 in the feces of finishing cattle. The experimental design of the study was:
- Control - Cattles feed with a standard diet,
- NP 747 - Cattles feed with a standard diet with 1 x 10⁹CFU *Lactobacillus acidophilus* strain NPC 747 mixed in water and added to the diet at the time of feeding;
- NP 750 - Cattles feed with a standard diet with 1 x 10⁹CFU *Lactobacillus acidophilus* strain NPC 750 mixed in water and added to the diet at the time of feeding.
The result of the study was explained as: "Just 14 d after initiating treatment, significant (P < .05) differences were observed among the three treatment groups. At this sampling time 56.6% of the control animals were positive, whereas only 20% of the animals fed with the NPC 747 sample and 11% of those fed with the NPC 750 probiotic were positive.

Comparing the data based on a positive pen basis, significant (P < .05) differences were also observed. Forty-one percent of the pens receiving the NPC 750 treatment had at least one positive animal, which was significantly (P < .05) the percentage of pens in cattle receiving NPC 747 (66% with at least one positive sample).'' Expressed in log units, the best data reduces the number of positives by around 0.5 logs (1 log is a ten times reduction).
At the filing date of the present invention the study was published on the Internet at the address: http://www.amif.org/ProbioticsReport042302.pdf.

Ongoing work has shown that levels of E. coli increase in cattle during the finishing period. Feeding of specific strains of beneficial bacteria has shown to reduce the levels of pathogenic proliferation. Studies of this nature are eliciting positive responses from a number of meat packers. Many packers are making strong recommendations to their supplying feedyards to feed probiotics to help with this issue. Their position is that if the level of E. coli entering the facility via the animal is reduced, their ability to further reduce contamination is vastly improved.

The research into this area is ongoing by universities and a number of companies. In particular several bacterial strains developed by Lallemand Animal Nutrition (LAN; Milwaukee, WI) have shown significant results in reducing the concentrations of E. coli O157:H7 and Salmonella via a process known as competitive exclusion. Competitive exclusion is a process by which beneficial bacteria are used to colonize the lining of the intestinal walls, reducing the area available for attachment by pathogenic microbes. The results so far confirm earlier theories that part of the effect noted through the feeding of beneficial bacteria results from this reduction in the area of the intestinal lining available to the pathogen for attachment.

Certain, specific strains of *Lactobacilli* and *Propionibacterium* developed by LAN have proven effective at reducing the numbers of these pathogens under different environmental conditions. Probiotic research has shown the effectiveness of gut colonization of beneficial bacteria in reducing pathogenic populations through competitive exclusion of these harmful organisms. In recent in vitro collaborative work by LAN and AgTech (Waukesha, WI., a 15 year-old biotech research company), it was found that several bacterial strains were highly effective in inhibiting the growth and development of strains of *Salmonella* and *E. coli* including E. coli O157:H7. The results indicate that in particular the BG2FO4 strain of *Lactobacillus Acidophilus* was very effective in inhibiting all strains of pathogenic E. coli tested. It is also important to note that the inhibition was a result, not only of competitive exclusion but also a result of the action of extracellular bacteriocins produced by the *Lactobacillus.* The results also indicated inhibition of several strains of *Salmonella.* A concluding result was that *Lactobacillus Acidophilus* BG2FO4 exhibits a high degree of pathogen oriented anti-microbial activity and is an excellent choice for use in beef cattle for this purpose.

The issued patent US5718894 describes a formulation for use in the promotion of growth or weight gain in a farm animal. The formulation comprises two groups of bacteria. A so-called first bacterium capable of producing lactic acid in the gastrointestinal tract of the animal and a second bacterium capable of producing a bactericide to which the bacteria are resistant, wherein said second bacterium is a Bacillus. The bactericide produced by the bacillus strain is capable of combating microorganisms that are the positive agent of enteric disorders, e.g. Staphylococcus aureus, E. coli and Salmonella (see column 2, lines 23-31). Examples of bacterium capable of producing lactic acid are bacteria of the genus Lactobacillus or Enterococcus. These are used to produce lactic acid and thus reduce the local pH in the gastrointestinal tract of the animal (see column 2, lines 8-22). A specific formulation for use in pigs is described. It is composed of the four strains Lactobacillus, Enterococcus faecalis, Enterococcus faecium and Bacillus licheniformis. Each strain is used at 10⁹ cfu/g.

In summary current research has already and continues to reveal useful methodologies for the control of pathogenic bacterial populations in farm animals such as beef cattle. In relation to use of probiotic bacteria relevant detailed studies have mainly focused on use of suitable *Lactobacillus Acidophilus* strains.

### SUMMARY OF THE INVENTION

The problem to be solved by the present invention may be seen in the provision of an farm animal feed composition that has an improved ability with respect to decreasing the number of Escherichia coli O157: H7 in the farm animal (preferably a cattle) when the farm animal were challenged with the Escherichia coli O157:H7 pathogen.

A solution to this is based on that the present inventors have identified that a feed composition comprising *Enterococcus* strains works better than a corresponding feed composition comprising similar amounts (CFU/g) of *Lactobacillus Acidophilus* strains.

Working examples herein demonstrate that cattle feed with around 10⁹ cfu *Enterococcus* bacteria per day had a significant reduction of the number of Escherichia coli O157:H7 quantified in the faeces of the challenged animals. The reduction was around 1.5 to 2 logs in 10 to 14 days. 1 log unit denotes a ten times reduction and 2 log units denotes a 100 times reduction.

The above mentioned published corresponding example of an animal feed composition comprising *Lactobacillus Acidophilus* resulted in around 0.5 log reduction (see the Mindy Brashears et al. study discussion above). Without being limited to theory, it is believed that direct-feed microbial (DFM) products currently being commercially sold in cattle to reduce the number of Escherichia coli are based on *Lactobacillus acidophilus,* and they reduce the number of the target pathogen only by 0.5 logs at best.

In relation to the reduction of the number of Escherichia coli O157:H7, *Enterococcus* bacteria work better than *Lactobacillus acidophilus* bacteria. However, apart from *Enterococcus* the feed product may comprise smaller amounts of *Lactobacillus acidophilus* bacteria.

Accordingly, a first aspect of the invention relates to a farm animal feed product comprising at least 10⁶ CFU/g feed of probiotic *Enterococcus* bacteria, characterized in that the product has at least 2.5 times more of *Enterococcus* bacteria than *Lactobacillus acidophilus* bacteria measured as CFU/g feed.

A second aspect of the invention relates to a method for feeding a farm animal comprising feeding the farm animal with a farm animal feed product comprising at least 10⁶ CFU/g feed of probiotic *Enterococcus* bacteria, characterized in that the product has at least 2.5 times more of *Enterococcus* bacteria than *Lactobacillus acidophilus* bacteria measured as CFU/g feed.

### DEFINITIONS

Prior to a discussion of the detailed embodiments of the invention is provided a definition of specific terms related to the main aspects of the invention.

The term "probiotic" is a well-defined term in the art and relates to a microorganism that confers health benefit to a farm animal when it has been in physical contact (e.g. when eaten) with the animal.

The term "*Enterococcus*" is a well-known and well-defined term for this *Enterococcus* genus of bacteria species. For further details see e.g. the standard reference book Bergeys Manual of Systematic Bacteriology. Based on his general knowledge, the skilled person is perfectly capable to determine whether or not a specific *Enterococcus* bacterium of interest is a bacterium of the *Enterococcus* genus.

The term "CFU" denotes Colony Forming Units.

Embodiments of the present invention are described below, by way of examples only.

### DETAILED DESCRIPTION OF THE INVENTION

### Farm animal feed product

The farm animal feed product should comprise suitable farm animal feedstuff ingredients. The skilled person is aware of selecting the adequate ones in relation to the specific farm animal of interest. Herein, such suitable farm animal feedstuff ingredients may be termed farm animal feedstuff ingredients known per se.

These ingredients should preferably be in concentrations adjusted to meet animal's dietary requirements and may include nutrient ingredients such as animal protein products, at about 0-95 weight percent; plant protein products, at about 0-95 weight percent; poultry egg products, at about 0-25 weight percent.

Further, the farm animal feed product may also comprise other suitable ingredients such as antibiotics such as Sarafin, Romet, Terramycin at about 0.01-50 weight percent; cyanocobalamin at about 40-60 mg/kg; D-biotin at about 5-20 mg/kg; D-pantothenic acid at about 250-350 mg/kg; folic acid at about 10-30 mg/kg; L-ascorbyl-2-polyphosphate (STAY-C, stable form of vitamin C) at about 1,000-4,000 mg/kg; myoinositol at about 3,000-4,000 mg/kg; niacin at about 600-800 mg/kg; p-amino-benzoic acid at about 350-450 mg/kg; pyridoxine hydrochloride at about 40-60 mg/kg; riboflavin at about 125-175 mg/kg; thiamine hydrochloride at about 50-80 mg/kg; choline chloride at about 6,500 7,500 mg/kg.
The farm animal feed product may be present in any suitable form, such as a powder, liquid or in form of pellets or tablets.

A preferred farm animal feed product is a composition comprising *Enterococcus* bacteria in a bolus, preferably a gelatin bolus. A most preferred farm animal feed product is a composition comprising *Enterococcus* bacteria, Glucidex IT12 (around 30%) and Type 4A Act Molecular Sieve Powder (around 10%).

The farm animal feed product may be in form of e.g. two different compositions one comprising the suitable farm animal feedstuff ingredients and the other comprising the *Enterococcus* bacteria as described herein. In such a case the farm animal feed product is comprised by such two compositions and accompanied by suitable instructions to administer them to the farm animal either simultaneously or sequentially. In other words, while the farm animals are fed with the suitable farm animal feedstuff ingredients they should also be fed with the probiotic *Enterococcus* bacteria as described herein.

Alternatively, the farm animal feed product may be in form of a composition comprising the suitable farm animal feedstuff ingredients and the probiotic *Enterococcus* bacteria as described herein. This may e.g. be in the form of a suitable powder, a liquid or in the form of pellets or tablets.

In order to e.g. improve some stability aspects of the probiotic bacteria it may be advantageous to provide the farm animal feed product as an stable emulsion of solids in-oil comprised by lipid soluble bioactive compounds such as inhibitory furanones dissolved in lipid forms of the continuous phase and with dry feed ingredients and the probiotic bacteria of interest forming the dispersed phase of the stable emulsion. See e.g. W002/00035 for further details.

Further, the farm animal feed product may be in form of a capsule e.g. a microencapsulated product.

As described above, a main point of the invention is to use *Enterococcus* bacteria instead of the *Lactobacillus acidophilus* bacteria as described in the prior art.

Accordingly, the farm animal feed product as described herein preferably comprises at least 5 times more of *Enterococcus* bacteria than *Lactobacillus acidophilus* bacteria measured as CFU/g feed, more preferably comprises at least 50 times more of *Enterococcus* bacteria than *Lactobacillus acidophilus* bacteria measured as CFU/g feed, even more preferably comprises at least 500 times more of *Enterococcus* bacteria than *Lactobacillus acidophilus* bacteria measured as CFU/g feed and most preferably comprises at least 5000 times more of *Enterococcus* bacteria than *Lactobacillus acidophilus* bacteria measured as CFU/g feed.

Said in another way, the most preferred farm animal feed product does not comprise significant amounts of *Lactobacillus acidophilus.* Such a most preferred farm animal feed product may be denoted a farm animal feed product consisting of at least 10⁶ CFU/g feed of probiotic *Enterococcus* bacteria.

Preferably, the farm animal feed product comprises the probiotic *Enterococcus* bacteria in a concentration of at least 10⁶ CFU/g feed, more preferably in a concentration of at least 10⁸ CFU/g feed, even more preferably in a concentration of at least 10¹⁰ CFU/g feed and most preferably in a concentration of at least 10¹¹ CFU/g feed. Generally, the farm animal feed product comprises the probiotic *Enterococcus* bacteria in a concentration of less than 10¹⁴ CFU/g feed. In a preferred embodiment, the farm animal feed product comprises the probiotic *Enterococcus* bacteria in a concentration from 10⁸ CFU/g feed to 10¹² CFU/g.

### Probiotic Enterococcus bacteria

The probiotic *Enterococcus* bacteria may be any probiotic *Enterococcus* bacteria. Based on the herein disclosed information the skilled person is capable of selecting a specific *Enterococcus* strain of interest.

Preferably, the *Enterococcus* strain is an *Enterococcus faecium.*

Preferred *Enterococcus faecium* strains are Sf273 (CHCC 4202) and Sf301 (CHCC 3828). The farm animal feed product preferably comprises both Sf273 (CHCC 4202) and Sf-301 (CHCC 3828) in a ratio of preferably 50:50 (based on potency). The public deposition number of Sf301 (CHCC 3828) is DSM4789. The public deposition number of Sf273 (CHCC 4202) is ATCC27273.

Preferably, the *Enterococcus* bacteria are selected to be tolerant of the following conditions: high acid (pH 4.0), high concentrations of volatile fatty acids (200 to 400 mM mix-tures of acetic, propionic and butyric acids) and complete anaerobiosis.

Working example 2 herein, gives an example of a preferred assay to test if an *Enterococcus* bacteria is tolerant to these conditions.

More preferably the *Enterococcus* bacteria are also oxygen scavengers. Such bacteria are much more stable to oxygen exposure, moisture and heat than L. acidophilus.

Based on the information provided herein, combined with the common knowledge of the skilled person, it is routine work to select *Enterococcus* bacteria tolerant to the conditions given above.

Combined, these traits will confer a high degree of survival within the gastrointestinal tract of feedlot cattle. The product bacteria will be metabolically active upon ingestion by the animal. This activity can have an immediate impact either on the environment within the gastrointestinal tract, or on the E. coli cells present or on the receptor sites/niches with which the E. coli cells associate. Or, it could be any combination of these influences.

### Farm animal

The farm animal may be a pig, a cow, a cattle, a sheep, a chicken, a duck, or an ostrich. More preferably the farm animal is a ruminant animal, in particular a cattle or a cow. Most preferably the farm animal is a cattle.

### A method for feeding a farm animal comprising feeding the farm animal with a farm animal feed product as described herein

The feeding may be done according to the art and the skilled person is aware of how to properly feed farm animals.

Preferably, the farm animals are fed with an amount of farm animal feed product that provides at least 10⁷ CFU *Enterococcus* bacteria per animal per day, more preferably the farm animals are feed with an amount of farm animal feed product that provides at least 10⁸ CFU *Enterococcus* bacteria per animal per day, even more preferably the farm animals are feed with an amount of farm animal feed product that provides at least 10⁹ CFU *Enterococcus* bacteria per animal per day and most preferably the farm animals are feed with an amount of farm animal feed product that provides at least 10¹⁰ CFU *Enterococcus* bacteria per animal per day. Generally, the farm animals are fed with an amount of farm animal feed product that provides less than 10¹³ CFU *Enterococcus* bacteria per animal per day. In a preferred embodiment, the farm animals are fed with an amount of farm animal feed product that provides from 10⁸ CFU to 10¹¹ *Enterococcus* bacteria per animal per day, more preferably the farm animals are feed with an amount of farm animal feed product that provides from 10⁹ CFU to 10¹⁰ *Enterococcus* bacteria per animal per day.

The animals may preferably be fed once a day. Alternatively they may be fed twice a day or once every second day. The skilled person is aware of what is best in relation to a specific farm animal of interest.

Preferably, the farm animals are fed with the farm animal feed product as described herein at least once a day for at least 10 days, more preferably the farm animals are fed with the farm animal feed product as described herein at least once a day for at least 20 days.

Preferably, the farm animals are fed with the farm animal feed product as described herein until slaughter. In other words, the farm animals are preferably feed with the farm animal feed product as described herein at least once a day for at least the last 10 days until slaughter, more preferably the farm animals are feed with the farm animal feed product as described herein at least once a day for at least the last 20 days until slaughter.

Preferably, the farm animal feed product are used for feeding the animals in an amount and for a number of days where the animal feed reduces the number of Escherichia coli O157:H7 cells quantified in the faeces of the challenged animals by at least 1.5 logs, more preferably at least 2 logs.
Working examples herein describes a suitable assay to quantitatively measure this.

### EXAMPLES

### Example 1: Dose Titration Study to determine the effect of two different dosing regimens of a characterized Direct Fed Microbial Culture on the post-challenge fecal shedding of Escherichia coli O157: H7

### Bacteria containing feed products:

CHB DFM: Two Enterococcus faecium strains present together at 50:50 (based on potency) in a gelatin bolus. The strains are Sf273 (CHCC 4202) and Sf-301 (CHCC 3828). The two Enterococcus faecium strains each are present in the product at 2.5 x 10⁹ CFU/g.
CHB Probios TC: A corresponding product, which comprises probiotic Enterococcus faecium bacteria in a similar CFU/g as for CHB DFM. This product also comprised active dry yeast at around 2.5 x 10⁹ CFU/g.

### Objective:

The objective of this project was to explore the effect of two different doses of CHB DFM on the magnitude of fecal shedding of Nai^{r} *E*. *coli* O157: H7 in beef cattle fed a highly fermentable complete ration.

### Materials and Methods:

Twelve beef steer calves weighing approximately 400 pounds were ranked by body weight and randomly allotted to one of three treatment groups. The treatment groups were control (no DFM) and DFM dosed at 2, or 20 g/head/day. All calves were orally dosed with DFM using gelatin boluses in order to assure that they received their daily target dose of DFM.
A similar strategy was used for Probios TC and Probios TC was dosed at 2, or 20 g/head/day.

Cattle were housed together in a single isolation room and allowed to commingle throughout the study. All cattle were allowed to consume a ration formulated with rolled corn and corn gluten feed containing sodium monensin (30 grams/ton). Fecal samples were collected and provided to detection of *E. coli* O157: H7 by enrichment technique to assure that calves were free of (Nal^{r}) *E. coli* O157: H7 prior to challenge.

Prior to the initiation of the study, all cattle were identified using duplicate unique Temple® ear tags and were vaccinated with a modified live virus vaccine containing IBR, BVD, PI3, and BRSV (Bovishield 4®, Pfizer), 2 ml intranasal vaccination containing IBR and PI3 (TSV-2®, Pfizer), a single 2 ml injection of a Clostridial vaccine (Vision-7®, Intervet), and a single injection of anthelmintic to control internal and external parasites (Dectomax®, Pfizer).

### Experimental Design:

The following treatment groups were evaluated.
- Treatment A: Non-medicated Control (n = 4)
- Treatment B: CHB - Direct Fed Microbial (CHB-DFM) at a rate of 2 grams/head/day (n = 4)
- Treatment C: CHB - Direct Fed Microbial (CHB-DFM) at a rate of 20 grams/head/day (n = 4)
- Treatment D: Probios TC at a rate of 2 grams/head/day
- Treatment E: Probios TC at a rate of 20 grams/head/day

Animals were inoculated with *E. coli* O157: H7, strains FRIK 1123 and FRIK 2000 which were adapted to nalidixic acid (Nal^{r}) in the laboratory (20 µg/ml). The organisms were grown in GN broth (Difco laboratories, Detroit, MI.) for 7 h (approx. 0.8 abs at 600 nm), the two cultures were pooled and colony counts of the pooled cultures were done by spread plate technique. Each animal was inoculated (day 0) by using a stomach tube through a Frick speculum with 60 ml of the pooled cultures containing 8.6 x 10⁸ CFU/ml of Nal^{r} *E. coli* O157:H7 (5.2 x 10¹⁰ CFU/animal). Following administration of the challenge material, the tube was flushed with 120 mL of sterile phosphate buffered saline.

Animals were evaluated daily for evidence of adverse reactions. Fecal (rectal) specimens were collected on 1, 3, 5, 8, 10, 12, 14, 17, 19, 23, 24, 26, and 30 days following oral challenge. Fecal samples were placed in whirl paks, packed in ice and provided for detection and quantification of Nal^{r} *E*. *coli* O157: H7.

### Detection and enumeration of Nal^{r} E. coli O157:H7:

One gram of feces was added to 9.0 ml of GN broth containing 50 µl (0.05mg/liter) of cefixime (C), 200 µl (10mg/liter) of cefsulodin (C), and 100 µl (8mg/liter) of vancomycin (V). Samples were vortexed for 30 sec, serially diluted, and 100 µl of 10⁻¹, 10⁻², 10⁻³ dilutions was spread plated, in triplicate, onto sorbitol MacConkey agar (SMAC) plates containing 20 µg/ml of Nal. The remaining GN broth was incubated as an enrichment step in the isolation procedure. After 6 h incubation at 37°C, 1.0 ml was transferred into 9.0 ml of GNccv broth and incubated an additional 18 to 24 h at 37°C. The inoculated SMAC plates were incubated for 24 h at 37°C and typical sorbitol-negative (gray colored) colonies were counted. A maximum of three colonies per sample per animal were collected, streaked onto blood agar plates, and incubated for 24 h at 37°C. The indole test was done on colonies from the blood agar plates; indole positive colonies were tested for agglutination specific for O157 (Oxoid Diagnostic Reagents, Basingstock, Hampshire, England).
If *E. coli* O157:H7 colonies were not detected by direct plating (detection limit > 10²/g), GNccv broth incubated for 18 to 24 h was plated, in duplicate, on SMAC plates containing Nal (20 µg/ml) and incubated for 24 h at 37°C. Following incubation, three colonies per sample with typical colony morphology (from the enriched samples) were streaked on blood agar plates and incubated for 24 h at 37°C. The indole test was done on colonies from the blood agar plates and indole positive colonies were tested for agglutination specific for 0157.

### Statistical Analysis:

The study had two outcomes of interest. First, the level of fecal *E. coli* O157:H7 shedding was compared between treatment groups. The independent variables were treatment, day, and the treatment by day interaction. The comparison was done using repeated measures analysis of variance (MIXED procedure, SAS Institute Inc.). The outcome was the level of fecal shedding (CFU/g of feces) with group as the treatment and day as the repeated measure. Day and treatment interaction was included as a fixed effect. Colony counts were log transformed prior to analysis.

### Results:

Cattle in all groups shed at least 10² CFU/g (range 10² to 10⁴) of Nal^{r} *E. coli* O157: H7 in the feces during the first week (days 1, 3 and 5) after inoculation. After that there was a general decrease in magnitude of shedding and numbers of Nal^{r} *E. coli* O157:H7 recovered ranged from 10² to undetectable (see Table 1). After day 12, the shedding pattern was somewhat erratic with concentrations fluctuating from 10² to undetectable. Treatment groups fed DFM at 2 or 20 g shed lower concentrations of Nal^{r} *E*. *coli* 0157: H7 in the feces compared to the control (P values = 0.01 and 0.06, respectively). The extent of reduction was greater in the group dosed with 20 g compared to 2 g dose. Table 3 reports data from a similar study made during another period than the study behind the data of Table 1. This second data confirms the overall results described above.

### Conclusions:

DFM at 20 g per animal per day caused a significant reduction in the level of shedding of Nal^{r} *E*. *coli* O157:H7.

**Table 1.**

| Effects of Direct-fed microbials (DFM) on fecal shedding of Nalidixic acid-resistant *E. coli* O157:H7 in cattle. | | | | |
|---|---|---|---|---|
| **Sampling days** | **DFM, g/animal/day** | | | |
| | **0** | **2** | **20** | |
| 0 | 3.5 x10⁴ | 3.5 x10⁴ | 3.5 x10⁴ | |
| 1 | 2.5 x10⁴ **a** | 1.5 x10⁴ **a** | 3.5 x10² **a** | |
| 3 | 1.5 x10⁴ **a** | 9.1 x10³ **a** | 2.3 x10² **a** | |
| 5 | 6.5 x10³ **a** | 1.6 x10³ **a** | 2.2 x10³ **a** | |
| 8 | 7.6 x10² **a** | 6.0 x10¹ **a** | 3.0 x10² **a** | |
| 10 | 3.9 x 10² **a**, **b** | 5.7 x10² **a** | 5.4 **b** | |
| 12 | 3.3 x10¹ **a** | 3.0 x10¹ **a** | 0 **b** | |
| 14 | 1.8 **a** | 2.9 **a** | 9.4 x10¹ **a** | |
| 17 | 7.4 x10¹ **a** | 9.3 **a** | 5.3 x10¹ **a** | |
| 19 | 1.9 x10³ **a** | 2.6 x10¹ **a** | 2.9 **b** | |
| 23 | 4.5 x10² **a** | 1.2 x10² **a** | 1.1 x10¹ **a** | |
| 24 | 5.4 **a** | 2.0 **a** | 1.6 x10² **a**, **b** | |
| 26 | 6.3 x10¹ **a** | 9.5 **a** | 1.5 **a** | |
| 30 | 0 **a** | 0 **a** | 1.8 **a** | |
| Treatment effect P= 0.02 Days effect P < 0.01 Treatment by Days Interaction P = 0.6 a, b Means not sharing the same letters differ at P < 0.1. | | | | |

**Table 1.**

| *Treatment Means* | | |
|---|---|---|
| **Treatment** | **Mean (CFU/g of feces)** | **Significance** |
| Control, 0 g/day | 1.9 x10² | Control vs. 2 g DFM P = 0.06 Control vs. 20 g DFM P = 0.01 |
| DFM, 2 g/day | 4.5 x10¹ | 2 g DFM vs. 20 g DFM P = 0.54 |
| DFM, 20 g/day | 2.8 x10¹ | 20 g DFM vs. 200 g DFM P = 0.01 |
| P-value (treatment effect) = 0.02. | | |

**Table 3.**

| Effects of Direct-fed microbials (DFM) on fecal shedding of Nalidixic acid-resistant *E. coli* O157:H7 in cattle. | | | | | |
|---|---|---|---|---|---|
| Day | Control | DFM 2gX | DFM 20g | TC 2g | TC 20g |
| D0 | 3700000 | 3700000 | 3700000 | 3700000 | 3700000 |
| D1 | 3400000 | 120000 | 2400000 | 750000 | 3700000 |
| D3 | 900000 | 120000 | 580000 | 100000 | 580000 |
| D5 | 83000 | 33000 | 250000 | 60000 | 3800000 |
| D8 | 5000 | 470 | 14000 | 160 | 35000 |
| D10 | 2800 | 120 | 72 | 1300 | 520 |
| D12 | 1400 | 110 | 100 | 11000 | 570 |
| D15 | 2000 | 130 | 7 | 120 | 620 |
| D19 | 120 | 350 | 19 | 1700 | 17 |
| D22 | 17 | 17 | 21 | 18 | 9 |
| D24 | 230 | 230 | 0 | 18 | 14 |
| D26 | 9 | 61 | 0 | 0 | 0 |

### Example 2: Assay to select Enterococcus bacteria that are tolerant to preferred conditions:

A number of publicly avialable *Enterococcus* bacteria were tested in the assay described below. The strains SF273 (CHCC4202) and SF301(CHCC 3828) were both tolerant to the below described testing conditions.

### Exposure to Rumen Fluid

The medium of Bryant MP and Burkey LA (J. Dairy Science 1960) containing 40% rumen fluid (RF medium) was prepared either under 100% CO2 (with sodium carbonate solution as buffer) or under 80%:20% N2:CO2 headspace gas (with sodium bicarbonate solution as buffer). This medium was used to score growth of the test strains as 0 (no growth) or +, ++, +++, or ++++ (excellent growth) at 37C after 48 to 72 h.

### Exposure to Volatile Fatty Acids

Medium 10 of Bryant MP and Robinson IM (J. Dairy Science 1966) was prepared to test the tolerance of each test strain to volatile fatty acids (acetic, propionic and butyric acids, 200 to 400 mM). This medium was used to score growth of the test strains as 0 (no growth) or +, ++, +++, or ++++ (excellent growth) at 37C after 48 to 72 h. Only those strains having a +++ or ++++ score advanced in the testing procedure are in present context an *Enterococcus* bacterium considered tolerant high concentrations of volatile fatty acids (200 to 400 mM mix-tures of acetic, propionic and butyric acids).

Acid Tolerance

Medium 10 Bryant MP and Robinson IM (J. Dairy Science 1966) was prepared and poised at pH 4.0, 5.0, or 6.0 using a 5 N solution of HCl (hydrochloric acid). The medium was autoclaved, cooled and then inoculated with each test strain. These media were used to score growth of the test strains as 0 (no growth) or +, ++, +++, or ++++ (excellent growth) at 37C after 48 to 72 h. Only those strains having a +++ or ++++ score in the pH 4.0 medium advanced in the testing procedure are in present context an *Enterococcus* bacterium considered tolerant of high acid (pH 4.0) concentrations.

### Oxygen Tolerance

Medium 10 of Bryant MP and Robinson IM (J. Dairy Science 1966) was prepared to test the tolerance of each test strain to oxygen tolerance. In this test, the medium was modified as follows: 2% w/v agar was added to solidify the medium, the amount of resazurin (redox indicator) was doubled, and the amount of reductant, cysteine hydrochloride solution, was reduced by 50%. This medium was dispensed in 10 mL amounts and solidified after autoclaving in an upright position. Each test strain was grown in broth culture overnight and then stab-inoculated from top to bottom in the center of the 10 mL tubes of modified Medium 10. The inoculated tubes were exposed to the atmosphere for 5 min then closed and incubated overnight (ca. 18 h) at 37C. After incubation the top one-centimeter of the medium had oxidized (turned the redox indicator pink) and the resultant growth pattern of each test strain was scored. The strain was scored as a strict anaerobe if visible growth along the stab line was only in the reduced portion of the tube. The strain was scored as an oxygen tolerant anaerobe if strain growth extended into the pink (oxidized) portion of the medium. The strain was scored as a facultative anaerobe if growth was visible along the stab line within both the reduced and oxidized portions of the tube. The strain was scored as an aerobe if growth was visible only within the oxidized portion of the medium. In the present context an *Enterococcus* bacterium is considered tolerant to complete anaerobiosis conditions if it grew in the reduced portion of the medium.

### Oxygen scavenging

Medium 10 as modified for oxygen tolerance testing was used. After oxygen tolerance capacity was scored, the stab-inoculated tubes were re-incubated at 37 C for an additional 24 h. Then the oxidized zone of each tube was examined and scored as follows. If the pink zone was re-reduced to colorless, then the strain was scored as being an oxygen scavenger (characteristic present or absent). In the present context an *Enterococcus* bacterium is considered an oxygen scavenger if it re-reduced the medium.

### REFERENCES

The American Meat Institute (AMI) Foundation published 2002 result of a research study that was done by Mindy Brashears and Michael Galyean of Texas Tech University. At the filing date of the present invention the study was published on the Internet at the address: http://www.amif.org/ProbioticsReport042302.pdf.

## Claims

1. A farm animal feed product comprising at least 10⁶ CFU/g feed of probiotic *Enterococcus* bacteria, **characterized in that** the product has at least 2.5 times more of *Enterococcus* bacteria than *Lactobacillus acidophilus* bacteria measured as CFU/g feed.

2. The farm animal feed product of claim 1, wherein the product comprises farm animal feedstuff ingredients known per se.

3. The farm animal feed product of claims 1 or 2, wherein the product has at least 5000 times more of *Enterococcus* bacteria than *Lactobacillus acidophilus* bacteria measured as CFU/g feed.

4. The farm animal feed product of any of the preceding claims, wherein the probiotic *Enterococcus* bacteria is *Enterococcus faecium* bacteria.

5. The farm animal feed product of any of the preceding claims, wherein the *Enterococcus* bacteria are tolerant to the following conditions: high acid (pH 4.0), high concentrations of volatile fatty acids (200 to 400 mM mix-tures of acetic, propionic and butyric acids) and complete anaerobiosis.

6. A method for feeding a farm animal comprising feeding the farm animal with a farm animal feed product according to any of the claims 1-5.

7. The method for feeding a farm animal of claim 6, wherein the farm animal is a cattle.

8. The method for feeding a farm animal of claims 6 or 7, wherein the farm animals are feed with an amount of farm animal feed product that provides from 10⁹ CFU to 10¹⁰ *Enterococcus* bacteria per animal per day.

9. The method for feeding a farm animal of any of claims 6-8, wherein the farm animals are feed with the farm animal feed product at least once a day for at least 10 days, more preferably the farm animals are feed with the farm animal feed product at least once a day for at least 20 days.

10. The method for feeding a farm animal of any of claims 6-9, wherein the farm animal feed product are used for feeding the animals in an amount and for a number of days where the animal feed reduces the number of Escherichia coli O157:H7 cells quantified in the faeces of the challenged animals by at least 1.5 logs, more preferably at least 2 logs.
